# EUROPEAN PATENT APPLICATION

(11) **EP 4 672 348 A1**
(43) Date of publication of application: **31.12.2025**
(21) Application number: 25183904.9
(22) Date of filing: 19.06.2025
(51) Int. Cl.: H01M 4/04, H01M 4/139

(54) **APPARATUS FOR MANUFACTURING DRY ELECTRODE AND METHOD OF MANUFACTURING DRY ELECTRODE**

(30) Priority: 27.06.2024 KR 20240084742
(71) Applicant: SAMSUNG SDI CO., LTD., Yongin-si, Gyeonggi-do 17084 (KR)
(72) Inventor: PYUN, Ahram, Yongin-si, Gyeonggi-do 17084 (KR); LEE, Jinhyon, Yongin-si, Gyeonggi-do 17084 (KR); KWON, Seunguk, Yongin-si, Gyeonggi-do 17084 (KR); CHOI, Jongsup, Yongin-si, Gyeonggi-do 17084 (KR)
(74) Representative: Marks & Clerk LLP

(57) **Abstract**

An apparatus for manufacturing a dry electrode includes a laminating roller configured to laminate a free-standing film on a first surface of a current collector. The apparatus further include a first X-ray detector positioned adjacent to the first laminating roller and configured to irradiate X-rays onto the first free-standing film and detect metal material in the first free-standing film.

## Description

### BACKGROUND

### (a) Field

The present disclosure relates to an apparatus for manufacturing a dry electrode and a method of manufacturing a dry electrode.

### (b) Description of the Related Art

A rechargeable battery is a battery capable of being charged and discharged.

Recently, there is an increasing need for an apparatus for manufacturing a dry electrode for a secondary battery that does not use a solvent. An apparatus for manufacturing a dry electrode according to the related art makes the dry electrode by calendering fine powder including an active material, a conductive material, and a binder into a free-standing film by using a calendering roll, etc. and laminating the free-standing film to a current collector. Such an apparatus needs to detect metal materials that are unintentionally included in the free-standing film that are laminated on the current collector during a manufacturing process.

### SUMMARY

The present disclosure provides an apparatus for manufacturing a dry electrode capable of improving both the quality of the dry electrode and the stability of a process of manufacturing the dry electrode by detecting metal material on an outer surface or inside of a free-standing film laminated on a current collector.

The present disclosure also provides a method of manufacturing a dry electrode capable of improving both the quality of the dry electrode and the stability of a process of manufacturing the dry electrode by detecting metal material on an outer surface or inside of a free-standing film laminated on a current collector.

An aspect provides an apparatus for manufacturing a dry electrode including a laminating roller configured to laminate a free-standing film on a surface of a current collector; and an X-ray detector positioned adjacent to the laminating roller and configured to irradiate X-rays onto the first free-standing film and detect a metal material in the first free-standing film.

The X-ray detector may be positioned at a front side of the laminating roller.

The X-ray detector may include an X-ray source configured to irradiate the X-rays onto the first free-standing film from an upper side of the free-standing film; and a detector positioned to correspond to the X-ray source with the free-standing film disposed therebetween and configured to detect the X-rays.

The X-ray detector may be positioned at a rear side of the laminating roller.

The X-ray source may be a first X-ray source and the detector may be a first detector, and the X-ray detector may include a second X-ray source configured to irradiate X-rays onto the first free-standing film and the current collector from an upper side of the free-standing film; and a second detector positioned to correspond to the second X-ray source with the free-standing film and the current collector disposed therebetween and configured to detect the X-rays irradiated from the second X-ray source.

The apparatus may further include a marker spaced from the X-ray detector, located at a rear side of the laminating roller, and connected to the X-ray detector, the marker being configured to mark a part of first free-standing film at a position corresponding to the metal material.

The laminating roller may be a first laminating roller and the free-standing film may be a first free-standing film, and the apparatus may further include a second laminating roller configured to laminate a second free-standing film on a second surface of the current collector.

The apparatus may further include a third X-ray detector adjacent to the second laminating roller, the third X-ray detector being configured to irradiate the X-rays onto the second free-standing film and detect metal material inside the second free-standing film.

The third X-ray detector may be positioned at a front side of the second laminating roller.

The third X-ray detector may include a third X-ray source configured to irradiate X-rays onto the second free-standing film from an upper side of the second free-standing film; and a third detector positioned to correspond to the third X-ray source with the second free-standing film disposed therebetween, and the third detector being configured to detect the X-rays irradiated from the third X-ray source.

The third X-ray detector may be located at a rear side of the second laminating roller.

The third X-ray detector may include a fourth X-ray source configured to irradiate X-rays onto the second free-standing film, the current collector, and the first free-standing film from an upper side of the second free-standing film; and a fourth detector positioned to correspond to the fourth X-ray source with the second free-standing film, the current collector, and the first free-standing film disposed therebetween and configured to detect the X-rays irradiated from the fourth X-ray source.

The apparatus may further include a second marker spaced from the first X-ray detector and the third X-ray detector, located at a rear side of the second laminating roller, connected to the first X-ray detector and the third X-ray detector, and the second marker being configured to mark a part of at least one of the first free-standing film and the second free-standing film at a position corresponding to the metal material.

In addition, an aspect provides a method of manufacturing a dry electrode including laminating a first free-standing film on a first surface of a current collector; laminating a second free-standing film on a second surface of the current collector; and detecting metal material in at least one of the first free-standing film and the second free-standing film by irradiating X-rays onto at least one of the first free-standing film and the second free-standing film.

The method may further include marking a part of at least one of the first free-standing film and the second free-standing film at a position corresponding to the metal material.

The method may further include forming a plurality of electrode plates by notching the dry electrode including the current collector, the first free-standing film, and the second free-standing film.

The method may further include excluding electrode plates among the plurality of electrode plates that include the marking.

The forming of the plurality of electrode plates may include notching a part of the dry electrode that does not include the marking.

The detecting of the metal material inside at least one of the first free-standing film and the second free-standing film may be performed by irradiating X-rays onto the plurality of electrode plates.

The method may further include stacking electrode plates among the plurality of electrode plates that do not include the marking.

According to an embodiment, an apparatus for manufacturing the dry electrode capable is provided that both improves the quality of the dry electrode and the stability of a process of manufacturing the dry electrode by detecting metal material in an outer surface or inside of a free-standing film laminated on a current collector.

According to another embodiment, a method of manufacturing the dry electrode is provided that is capable of both improving the quality of the dry electrode and the stability of a process of manufacturing the dry electrode by detecting metal material in an outer surface or inside of a free-standing film laminated on a current collector.

At least some of the above and other features of the invention are set out in the claims.

### BRIEF DESCRIPTION OF THE DRAWINGS

FIG. 1 is a side view of an apparatus for manufacturing a dry electrode according to an embodiment.
FIG. 2 is a plan view of an example in which parts of a first free-standing film laminated on a current collector are marked by an apparatus for manufacturing a dry electrode according to an embodiment.
FIG. 3 is a side view of an apparatus for manufacturing a dry electrode according to another embodiment.
FIG. 4 is a flowchart of a method of manufacturing a dry electrode according to another embodiment.
FIG. 5 is a side view of an example of an apparatus for manufacturing a dry electrode performing a method of manufacturing the dry electrode according to another embodiment.
FIG. 6 is a diagram illustrating an example of a method of manufacturing a dry electrode according to another embodiment.
FIG. 7 is a diagram illustrating another example of a method of manufacturing a dry electrode according to another embodiment.
FIG. 8 is a diagram illustrating another example of a method of manufacturing a dry electrode according to another embodiment.
FIG. 9 is a diagram illustrating another example of a method of manufacturing a dry electrode according to another embodiment.

### DETAILED DESCRIPTION OF THE EMBODIMENTS

With reference to the attached drawings, embodiments of the disclosure will be described in detail below so that ordinary skilled in the art may implement the disclosure. The present disclosure may be embodied in many different forms and is not limited to the embodiments set forth herein.

Throughout the specification, unless explicitly described to the contrary, the word "comprise", and variations such as "comprises" or "comprising", will be understood to imply the inclusion of stated elements but not the exclusion of any other elements.

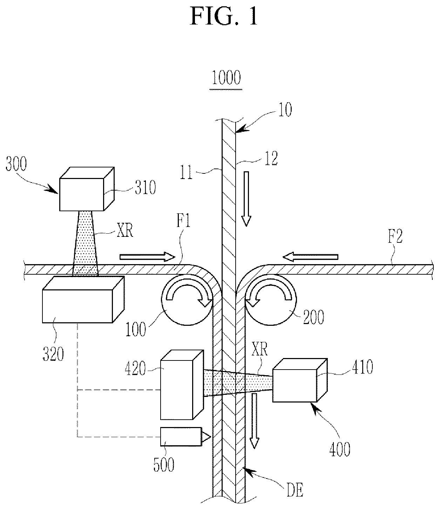

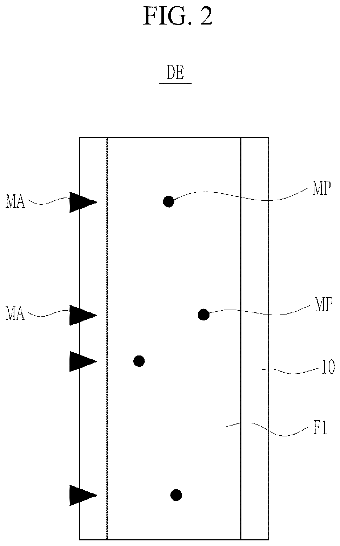

Hereinafter, an apparatus for manufacturing a dry electrode according to an embodiment will be described with reference to FIGS. 1 and 2.

The apparatus for manufacturing the dry electrode according to an embodiment may be an apparatus for manufacturing a dry electrode for a secondary battery. But the present disclosure is not limited thereto and may be an apparatus for manufacturing various types of dry electrodes.

FIG. 1 is a side view of an apparatus for manufacturing a dry electrode according to an embodiment.

Referring to FIG. 1, an apparatus 1000 for manufacturing the dry electrode according to an embodiment includes a first laminating roller 100, a second laminating roller 200, a first X-ray detector 300, a second X-ray detector 400, and a first marker 500.

The first laminating roller 100 laminates a first free-standing film F1 moving in a first direction on a first surface 11 of a current collector 10. The first laminating roller 100 may include various known laminating means and the present disclosure is not limited in this regard. The current collector 10 may move between the first laminating roller 100 and the second laminating roller 200 in a second direction crossing the first direction. For example, the first direction may include a horizontal direction and the second direction may include a vertical direction, but the present disclosure is not limited thereto.

The first free-standing film F1 may be formed by calendering a fine powder using various known feeders and rollers. That is, the fine powder supplied from the feeder to the rollers may be calendered to the first free-standing film F1 by the rollers.

The fine powder may include various known active materials, conductive materials, and binders. The fine powder may be prepared by mixing an active material, a conductive material, and a binder into a mixture by using various known mixing means. The mixture may be fiberized into a dry powder by using various known fibrillization means, but the present disclosure is not limited thereto.

The plurality of rollers may calender the fine powder supplied from the feeder into the first free-standing film F1. The plurality of rollers may be disposed in one direction, and fine powder may be supplied between the plurality of rollers and calendered to the first free-standing film F1. The plurality of rollers may calender the first free-standing film F1 by rolling and stretching the fine powder, but the present disclosure is not limited thereto. The plurality of rollers may rotate at the same angular velocity but are not limited thereto and may rotate at different angular velocities. Each of the plurality of rollers may rotate at a gradually faster angular velocity toward one direction in which the current collector 10 is located. In other embodiments, each of the plurality of rollers may rotate at a gradually slow angular velocity. The first laminating roller 100 may be located adjacent to a roller located at the rearmost end among the plurality of rollers.

The second laminating roller 200 laminates a second free-standing film F2 moving in a first direction on a second surface 12 of the current collector 10. The second laminating roller 200 may include various known laminating means, and the present disclosure is not limited in this regard. The current collector 10 may move in a second direction crossing the first direction between the second laminating roller 200 and the first laminating roller 100. In examples, the first direction may include a horizontal direction and the second direction may include a vertical direction, but the present disclosure is not limited thereto.

The second free-standing film F2 may be formed by calendering a fine powder by using various known feeders and rollers. That is, the fine powder supplied from the feeder to the rollers may be calendered to the second free-standing film F2 by the rollers.

The fine powder may include various known active materials, conductive materials, and binders. The fine powder may be prepared by mixing an active material, a conductive material, and a binder into a mixture by using various known mixing means. The mixture may be fiberized into a dry powder by using various known fibrillization means, but the present disclosure is not limited thereto.

The plurality of rollers may calender the fine powder supplied from the feeder into the second free-standing film F2. The plurality of rollers may be disposed in one direction, and fine powder may be supplied between the plurality of rollers and calendered to the second free-standing film F2. The plurality of rollers may calender the second free-standing film F2 by rolling and stretching the fine powder, but the present disclosure is not limited thereto. The plurality of rollers may rotate at the same angular velocity, but are not limited thereto and may rotate at different angular velocities. Each of the plurality of rollers may rotate at a gradually faster angular velocity toward one direction in which the current collector 10 is located. In other embodiments, the plurality of rollers may rotate at a gradually slow angular velocity. The second laminating roller 200 may be located adjacent to a roller located at the rearmost end among the plurality of rollers.

For example, the current collector 10 may move in a direction passing between the first laminating roller 100 and the second laminating roller 200 such that the first free-standing film F1 may be laminated on the first surface 11 and the second free-standing film F2 may be laminated on the second surface 12. The current collector 10 in which the first free-standing film F1 and the second free-standing film F2 are laminated may be wound by various known winding means, but the present disclosure is not limited thereto.

The first X-ray detector 300 is positioned adjacent to the first laminating roller 100. In particular, the first X-ray detector 300 is located at a front side of the first laminating roller 100. In this regard, the front side of the first laminating roller 100 may include a front side in a moving direction of the first free-standing film F1 moving in one direction, but is not limited thereto.

The first X-ray detector 300 may detect metal material inside the first free-standing film F1 by irradiating X-rays XR onto the first free-standing film F1. For example, the first X-ray detector 300 may detect metal material on an outer surface of the first free-standing film F1 by irradiating the X-rays XR onto the first free-standing film F1. The first X-ray detector 300 may include a first X-ray source 310 and a first detector 320.

The first X-ray source 310 may irradiate the X-ray XR that penetrate the first free-standing film F1 from an upper side of the first free-standing film F1 toward the first detector 320. The first X-ray source 310 may irradiate the X-rays XR at various wavelengths and various intensities.

The first detector 320 may correspond to the first X-ray source 310 with the first free-standing film F1 disposed therebetween. That is, the first detector 320 may face the first X-ray source 310 with the first free-standing film F1 disposed therebetween. The first detector 320 may detect the X-ray XR irradiated from the first X-ray source 310 and penetrating the first free-standing film F1 to detect the metal material on the outer surface of or inside of the first free-standing film F1.

The first X-ray detector 300 may detect the metal material on the outer surface or inside of the first free-standing film F1 before the first free-standing film F1 is laminated on the current collector 10. Such a configuration prevents absorption of the X-rays XR by the current collector 10. Thus, the sensitivity of an X-ray detection image may be improved, thereby increasing the overall production speed of a dry electrode DE.

The first X-ray detector 300 may be connected to the first marker 500. Thus, coordinates (positions) in the first free-standing film F1 where the metal material is detected by the first detector 320 may be transmitted to the first marker 500.

In another example, the first detector 320 of the first X-ray detector 300 may be connected to various known controllers, and a controller may be connected to the first marker 500. The coordinates of the first free-standing film F1 where the metal material is detected by the first detector 320 is located may be transmitted to the controller. And the coordinates in the first free-standing film F1 where the metal material is located may be transmitted from the controller to the first marker 500.

The second X-ray detector 400 is positioned adjacent to the first laminating roller 100. The second X-ray detector 400 is located at a rear side of the first laminating roller 100. The rear side of the first laminating roller 100 may include a rear side in the moving direction of the first free-standing film F1, but is not limited thereto.

The second X-ray detector 400 may detect metal material inside the first free-standing film F1 by irradiating the X-rays XR onto the first free-standing film F1. For example, the second X-ray detector 400 may detect metal material on the outer surface of the first free-standing film F1 by irradiating the X-rays XR onto the first free-standing film F1.

The second X-ray detector 400 may also detect the metal material inside the second free-standing film F2 by irradiating the X-rays XR onto the second free-standing film F2. For example, the second X-ray detector 400 may detect the metal material on an outer surface of the second free-standing film F2 by irradiating the X-rays XR onto the second free-standing film F2.

The second X-ray detector 400 may include a second X-ray source 410 and a second detector 420. The second X-ray source 410 may irradiate the X-rays XR penetrating the first free-standing film F1, the current collector 10, and the second free-standing film F2 from the upper side of the first free-standing film F1 or an upper side of the second free-standing film F2 and toward the second detector 420. The second X-ray source 410 may irradiate the X-rays XR at various wavelengths and intensities.

The second detector 420 may correspond to the second X-ray source 410 with the first free-standing film F1, the current collector 10, and the second free-standing film F2 disposed therebetween. The second detector 420 may face the second X-ray source 410 with the first free-standing film F1, the current collector 10, and the second free-standing film F2 disposed therebetween. The second detector 420 may detect the X-rays XR irradiated from the second X-ray source 410 that penetrate the first free-standing film F1, the current collector 10, and the second free-standing film F2 to detect the metal material on the outer surface or inside of the first free-standing film F1. The second detector 420 may also detect the X-rays XR irradiated from the second X-ray source 410 and that penetrate the first free-standing film F1, the current collector 10, and the second free-standing film F2 to detect the metal material on the outer surface or inside of the second free-standing film F2.

The current collector 10 may include a metal material, but may be formed as a thin film that allows the X-rays XR from the second X-ray source 410 to penetrate the film. The current collector 10 may have various thicknesses through which the X-rays XR of a set intensity may penetrate. The current collector 10 used in the apparatus 1000 for manufacturing the dry electrode may be moved by a roll-to-roll process so that the current collector 10 may have a thickness thinner than that of a current collector made in an apparatus for manufacturing a wet electrode.

The second X-ray detector 400 may be connected to the first marker 500. As such, the second detector 420 of the second X-ray detector 400 may set coordinates (positions) in the first free-standing film F1 at which the metal material detected by the second detector 420 is located or set coordinates in the second free-standing film F2 at which the metal material detected by the second detector 420 is located by transmitting the coordinates to the first marker 500.

In another example, the second detector 420 of the second X-ray detector 400 may be connected to various known controllers, and such a controller may be connected to the first marker 500. The coordinates of the first free-standing film F1 at which the metal material detected by the second detector 420 is located or the coordinates of the second free-standing film F2 at which the metal material detected by the second detector 420 is located may be transmitted to the controller, and the coordinates then may be transmitted from the controller to the first marker 500.

The first marker 500 is spaced from the first X-ray detector 300 and the second X-ray detector 400 and is located at the rear side of the first laminating roller 100. The first marker 500 may be connected to the first X-ray detector 300 and the second X-ray detector 400 to mark a part of the first free-standing film F1 at which the metal material is located or a part of the second free-standing film F2 at which the metal material is located. The first marker 500 may include various known marking means that are capable of marking the films.

With the above-described apparatus components, the dry electrode DE having passed through the first marker 500 and including the current collector 10, the first free-standing film F1, and the second free-standing film F2 may be manufactured.

FIG. 2 is a plan view illustrating an example in which parts of a first free-standing film laminated on a current collector are marked by an apparatus for manufacturing a dry electrode according to an embodiment.

Referring to FIG. 2, the first marker 500 may mark MA parts of the first free-standing film F1 at which a metal material MP is located inside the first free-standing film F1 laminated on the current collector 10 of the dry electrode DE. The first marker 500 may directly display the marks on the parts of the first free-standing film F1 or attach labels to the parts of the first free-standing film F1.

Further, the first marker 500 may mark parts of the second free-standing film F2 at which a metal material is located inside the second free-standing film F2 laminated on the current collector 10 of the dry electrode DE. The first marker 500 may directly display the marks on the parts of the second free-standing film F2 or attach labels to the parts of the second free-standing film F2.

The apparatus 1000 for manufacturing the dry electrode according to an embodiment may include the first X-ray detector 300 and the second X-ray detector 400, thereby detecting metal material on the outer surface or inside of the first free-standing film F1 or the second free-standing film F2 that is unintentionally included in the dry electrode during the manufacturing process. In addition, the apparatus 1000 for manufacturing the dry electrode according to an embodiment may detect metal material on the outer surface or inside of the first free-standing film F1 or the second free-standing film F2 that is unintentionally included in the dry electrode during the manufacturing process, and mark a part of the first free-standing film F1 or the second free-standing film F2 of the dry electrode at which the metal material is detected with the first marker 500. The marked parts of the dry electrode may be excluded from various further processing, which improves the quality of the dry electrode and improves the stability of a process of manufacturing the dry electrode.

Thus, according to embodiments of the present disclosure, an apparatus 1000 for manufacturing the dry electrode is provided that both improves the quality of the dry electrode and improves the stability of the process of manufacturing the dry electrode by detecting metal material on an outer surface or in a free-standing film laminated on a current collector.

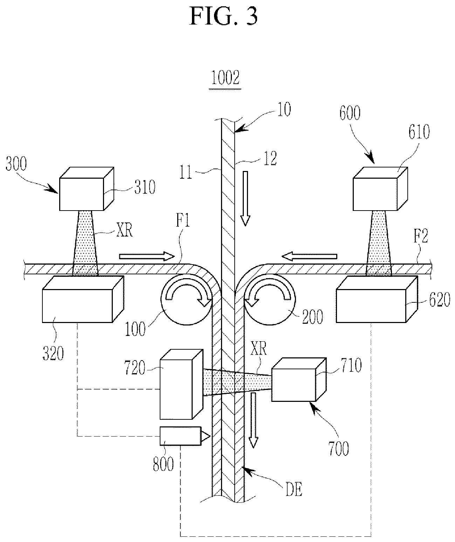

Hereinafter, an apparatus for manufacturing a dry electrode according to another embodiment will be described with reference to FIG. 3.

FIG. 3 is a side view of an apparatus for manufacturing a dry electrode according to another embodiment.

Referring to FIG. 3, an apparatus 1002 for manufacturing the dry electrode according to another embodiment includes the first laminating roller 100, the second laminating roller 200, the first X-ray detector 300, a third X-ray detector 600, a fourth X-ray detector 700, and a second marker 800 (e.g. a marker 800). In one example, the second marker 800 may correspond to the first marker 500 illustrated in FIG. 1. In one example, the apparatus 1000 of FIG. 1 may comprise two X-ray detectors 300, 500, and the apparatus 1002 of FIG. 3 may comprise three X-ray detectors 300, 600, 700.

The third X-ray detector 600 is positioned adjacent to the second laminating roller 200. In particular, the third X-ray detector 600 is located at a front side of the second laminating roller 200. The front side of the second laminating roller 200 may include a front side in a moving direction of the second free-standing film F2 moving in one direction, but is not limited thereto.

The third X-ray detector 600 may detect metal material inside the second free-standing film F2 by irradiating the X-rays XR onto the second free-standing film F2. Further, the third X-ray detector 600 may detect metal material on an outer surface of the second free-standing film F2 by irradiating the X-rays XR onto the second free-standing film F2.

The third X-ray detector 600 may include a third X-ray source 610 and a third detector 620. The third X-ray source 610 may irradiate the X-rays XR that penetrate the second free-standing film F2 from an upper side of the second free-standing film F2 toward the third detector 620. The third X-ray source 610 may irradiate the X-rays XR at various wavelengths and intensities.

The third detector 620 may correspond to the third X-ray source 610 with the second free-standing film F2 disposed therebetween. That is, the third detector 620 may face the third X-ray source 610 with the second free-standing film F2 disposed therebetween. The third detector 620 may detect the X-ray XR irradiated from the third X-ray source 610 and penetrating the second free-standing film F2 to detect metal material on the outer surface or inside of the second free-standing film F2.

The third X-ray detector 600 may detect metal material on the outer surface or inside of the second free-standing film F2 before the second free-standing film F2 is laminated on the current collector 10. With such a configuration, absorption of the X-rays XR by the current collector 10 is prevented. Thus, the sensitivity of an X-ray detection image may be improved, thereby increasing the overall production speed of the dry electrode DE.

The third X-ray detector 600 may be connected to the second marker 800. The third detector 620 of the third X-ray detector 600 may thereby transmit coordinates (positions) of the second free-standing film F2 at which the metal material detected by the third detector 620 is located to the second marker 800.

In another example, the third detector 620 of the third X-ray detector 600 may be connected to various known controllers, and such a controller may be connected to the second marker 800. The coordinates of the second free-standing film F2 at which the metal material detected by the third detector 620 is located may be transmitted to the controller, and the coordinates of the second free-standing film F2 at which the metal material is located and transmitted to the controller may be transmitted to the second marker 800.

The fourth X-ray detector 700 is positioned adjacent to the second laminating roller 200. In particular, the fourth X-ray detector 700 is located at a rear side of the second laminating roller 200. The rear side of the second laminating roller 200 may include a rear side in the moving direction of the second free-standing film F2, but is not limited thereto. In one example, the fourth X-ray detector 700 may include a third X-ray detector.

The fourth X-ray detector 700 may detect metal material inside the second free-standing film F2 by irradiating the X-rays XR onto the second free-standing film F2. The fourth X-ray detector 700 also may detect metal material on the outer surface of the second free-standing film F2 by irradiating the X-rays XR onto the second free-standing film F2. The fourth X-ray detector 700 may detect metal material inside the first free-standing film F1 by irradiating the X-rays XR onto the first free-standing film F1. The fourth X-ray detector 700 also may detect metal material on an outer surface of the first free-standing film F1 by irradiating the X-rays XR onto the first free-standing film F1.

For example, the fourth X-ray detector 700 may include a fourth X-ray source 710 and a fourth detector 720. The fourth X-ray source 710 may irradiate the X-rays XR that penetrate the second free-standing film F2, the current collector 10, and the first free-standing film F1 from an upper side of the second free-standing film F2 or an upper side of the first free-standing film F1 toward the fourth detector 720. The fourth X-ray source 710 may irradiate the X-rays XR at various wavelengths and intensities.

The fourth detector 720 may correspond to the fourth X-ray source 710 with the second free-standing film F2, the current collector 10, and the first free-standing film F1 disposed therebetween. That is, the fourth detector 720 may face the fourth X-ray source 710 with the second free-standing film F2, the current collector 10, and the first free-standing film F1 disposed therebetween. The fourth detector 720 may detect the X-ray XR irradiated from the fourth X-ray source 710 that penetrate the second free-standing film F2, the current collector 10, and the first free-standing film F1 to detect metal material on the outer surface or inside of the second free-standing film F2. The fourth detector 720 may detect the X-ray XR irradiated from the fourth X-ray source 710 that penetrate the second free-standing film F2, the current collector 10, and the first free-standing film F1 to detect the metal material on the outer surface or inside of the first free-standing film F1.

The current collector 10 may include a metal material and the X-rays XR from the fourth X-ray source 710 may penetrate the film. A thickness of the current collector 10 may be such that the X-rays XR may penetrate the current collector. The current collector 10 used in the apparatus 1002 for manufacturing the dry electrode may be moved by a roll-to-roll process so that the current collector 10 may thereby be thinner than a current collector used in an apparatus for manufacturing a wet electrode.

The fourth X-ray detector 700 may be connected to the second marker 800. The fourth detector 720 of the fourth X-ray detector 700 may thereby transmit coordinates (positions) of the second free-standing film F2 at which metal material detected by the fourth detector 720 is located or coordinates of the first free-standing film F1 at which metal material detected by the fourth detector 720 is located to the second marker 800.

In another example, the fourth detector 720 of the fourth X-ray detector 700 may be connected to various known controllers, and such a controller may be connected to the second marker 800. The coordinates of the second free-standing film F2 at which the metal material detected by the fourth detector 720 is located or the coordinates of the first free-standing film F1 at which the metal material detected by the fourth detector 720 is located may be transmitted to the controller, and the coordinates of the second free-standing film F2 at which the metal material is located or set coordinates of the first free-standing film F1 at which the metal material is located and transmitted to the controller may be transmitted to the second marker 800.

The second marker 800 is spaced from the third X-ray detector 600 and the fourth X-ray detector 700 and is located at a rear side of the first laminating roller 100. The second marker 800 may be connected to the first X-ray detector 300, the third X-ray detector 600, and the fourth X-ray detector 700 to mark a part of the first free-standing film F1 at which the metal material is located, or a part of the second free-standing film F2 at which the metal material is located. The second marker 800 may include various known marking means that are capable of marking the free-standing films.

For example, the second marker 800 may mark parts of the first free-standing film F1 at which the metal material is located inside the first free-standing film F1 laminated on the current collector 10 of the dry electrode. The second marker 800 may directly display marks on the parts of the first free-standing film F1 or attach labels to the parts of the first free-standing film F1. As another example, the second marker 800 may mark parts of the second free-standing film F2 at which metal material is located inside the second free-standing film F2 laminated on the current collector 10 of the dry electrode DE. The second marker 800 may directly display marks on the parts of the second free-standing film F2 or attach labels to the parts of the second free-standing film F2.

The apparatus 1002 for manufacturing the dry electrode according to another embodiment may include the first X-ray detector 300, the third X-ray detector 600, and the fourth X-ray detector 700, thereby detecting metal material on the outer surface or inside of the first free-standing film F1 or the second free-standing film F2 that is unintentionally included in the dry electrode during the manufacturing process.

In addition, the apparatus 1002 for manufacturing the dry electrode according to another embodiment may detect metal material on the outer surface or inside of the first free-standing film F1 or the second free-standing film F2 that is unintentionally included in the dry electrode during the manufacturing process. And the apparatus 1002 may mark a part of the first free-standing film F1 or the second free-standing film F2 of the dry electrode at which the metal material is detected with the second marker 800. The marked parts of the dry electrode may be excluded from various known next processes. Thus, the quality of the dry electrode may be improved and the stability of a process of manufacturing the dry electrode may also be improved.

As described above, the apparatus 1002 for manufacturing the dry electrode improves both the quality of the dry electrode and the stability of the process of manufacturing the dry electrode by detecting metal material on an outer surface or in a free-standing film laminated on a current collector.

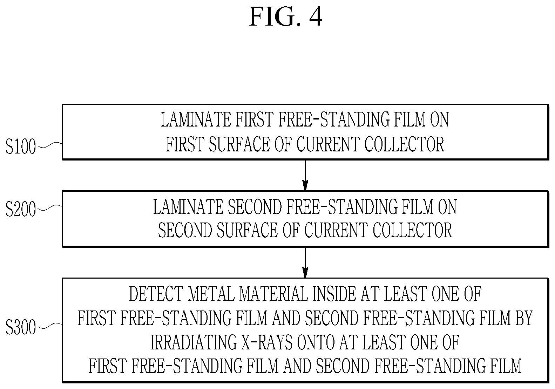

Hereinafter, a method of manufacturing a dry electrode according to an embodiment of the present disclosure will be described with reference to FIGS. 4 to 9.

The method of manufacturing the dry electrode may be performed by using the apparatus for manufacturing the dry electrode according to the embodiments described above, but is not limited thereto.

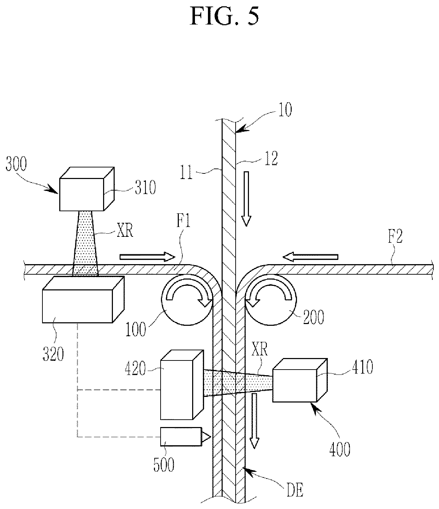

FIG. 4 is a flowchart for a method of manufacturing a dry electrode according to an embodiment of the disclosure. FIG. 5 is a side view of an example of an apparatus for manufacturing a dry electrode performing a method of manufacturing the dry electrode according to an embodiment of the disclosure.

Referring to FIGS. 4 and 5, the first free-standing film F1 is laminated on the first surface 11 of the current collector 10 (S100). The first free-standing film F1 may be formed by calendering fine powder including an active material, a conductive material, and a binder. The first free-standing film F1 may be laminated on the first surface 11 of the current collector 10 by using laminating means such as the first laminating roller 100.

Next, the second free-standing film F2 is laminated on the second surface 12 of the current collector 10 (S200). The second free-standing film F2 may be formed by calendering the fine powder including an active material, a conductive material, and a binder. The second free-standing film F2 may be laminated on the second surface 12 of the current collector 10 by using laminating means such as the second laminating roller 200.

Next, a metal material in at least one of the first free-standing film F1 and the second free-standing film F2 is detected by irradiating the X-rays XR onto at least one of the first free-standing film F1 and the second free-standing film F2 (S300). For example, the metal material in at least one of the first free-standing film F1 and the second free-standing film F2 may be detected by irradiating the X-rays XR onto at least one of the first free-standing film F1 and the second free-standing film F2 by using an X-rays detection means such as the first X-ray detector 300 and the second X-ray detector 400.

Next, a part of at least one of the first free-standing film F1 and the second free-standing film F2 at which metal material is located is marked. For example, a part of at least one of the first free-standing film F1 and the second free-standing film F2 having the metal material may be marked by using a marking means such as the first marker 500 connected to the X-rays detection means.

The dry electrode DE having the metal material located on at least one of the first free-standing film F1 and the second free-standing film F2 and having a part marked may be notched into a plurality of electrode plates. Marked electrode plates among the plurality of electrode plates may be excluded from the next processing steps such as an electrode plate stack process. On the other hand, unmarked electrode plates among the plurality of electrode plates may be used in further processes, such as in an electrode plate stack process.

The dry electrode DE having the metal material located in at least one of the first free-standing film F1 and the second free-standing film F2 and having a part marked may be formed as a plurality of jelly roll-shaped electrode assemblies by a winding process, etc. Marked electrode assemblies among the plurality of jelly roll-shaped electrode assemblies may be excluded from further processing, and unmarked electrode assemblies among the plurality of jelly roll-shaped electrode assemblies may be subject to further processes.

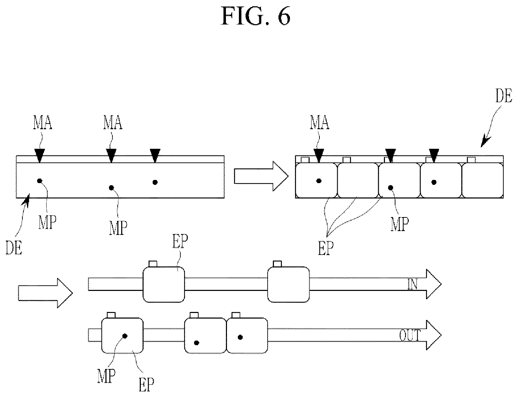

FIG. 6 is a diagram illustrating an example of a method of manufacturing a dry electrode according to another embodiment.

Referring to FIG. 6, as an example of the method of manufacturing the dry electrode, a plurality of electrode plates EP are formed by notching the dry electrode DE including a current collector, a first free-standing film, and a second free-standing film.

For example, the plurality of electrode plates EP may be formed by notching the dry electrode DE having parts in which the metal material MP is located and marked MA by using various known electrode notching means. The electrode plates EP including the marking MA may be excluded OUT, and the electrode plates EP that do not include the marking MA may be moved IN to a next process.

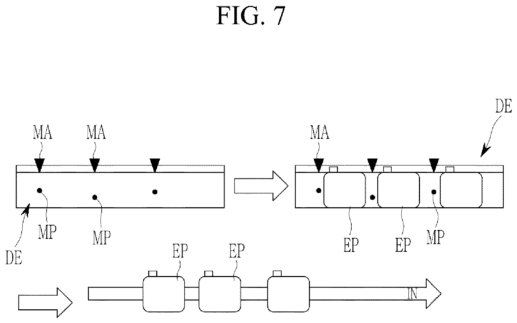

FIG. 7 is a diagram illustrating another example of a method of manufacturing a dry electrode according to another embodiment.

Referring to FIG. 7, as another example of the method of manufacturing the dry electrode, the plurality of electrode plates EP are formed by notching the dry electrode DE including a current collector, a first free-standing film, and a second free-standing film. The plurality of electrode plates EP may be formed by notching the dry electrode DE that includes marked MA parts in which the metal material MP is located by using various known electrode notching means. When forming the plurality of electrode plates EP, the plurality of electrode plates EP may be formed by notching parts of the dry electrode DE that do not include the marking MA, and the plurality of electrode plates EP not including the marking MA may be moved IN to a next process.

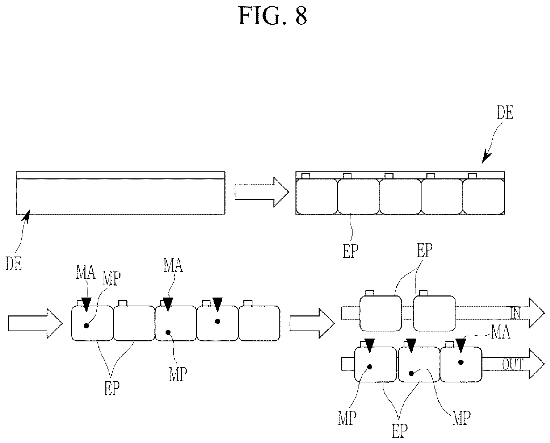

FIG. 8 is a diagram illustrating another example of a method of manufacturing a dry electrode according to another embodiment.

Referring to FIG. 8, as another example of the method of manufacturing the dry electrode, the plurality of electrode plates EP are formed by notching the dry electrode DE including a current collector, a first free-standing film, and a second free-standing film. The plurality of electrode plates EP may be formed by notching the dry electrode DE by using various known electrode notching means. The metal material MP inside at least one of the first free-standing film and the second free-standing film of the plurality of electrode plates EP may be detected by irradiating X-rays on the plurality of electrode plates EP, and the electrode plates EP in which the metal material MP is detected among the plurality of electrode plates EP may be marked MA. The electrode plates EP including the marking MA may be excluded OUT, and the electrode plates EP not including the marking MA may be moved IN to a next process.

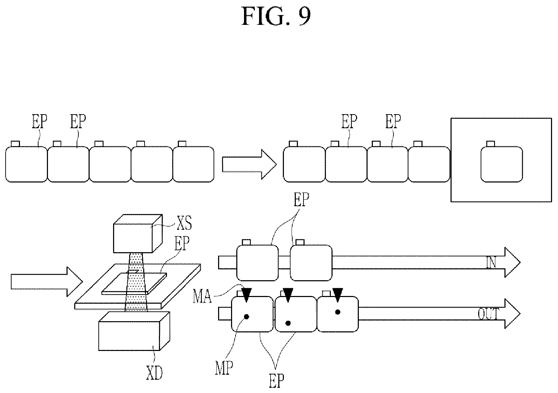

FIG. 9 is a diagram illustrating another example of a method of manufacturing a dry electrode according to another embodiment.

Referring to FIG. 9, as another example of the method of manufacturing the dry electrode, the plurality of electrode plates EP are formed by notching the dry electrode DE including a current collector, a first free-standing film, and a second free-standing film. The plurality of electrode plates EP may be formed by notching the dry electrode DE by using various known electrode notching means. X-rays penetrating each of the plurality of electrode plates EP from an X-ray source XS may be irradiated with an X-ray detector XD such that metal material MP in at least one of the first free-standing film and the second free-standing film of the plurality of electrode plates EP may be detected. The electrode plates EP from which the metal material MP among the plurality of electrode plates EP is detected may be marked MA. The electrode plates EP including the marking MA among the plurality of electrode plates EP may be excluded OUT, and the electrode plates EP not including the marking MA among the plurality of electrode plates EP may be moved IN to a next process. The electrode plates EPs not including the marking MA moved to the next process may be stacked into various known types of electrode assemblies.

The method of manufacturing the dry electrode according to this embodiment may detect, using X-rays, metal material in an outer surface or inside of each of the first free-standing film F1 or the second free-standing film F2 that is unintentionally included with the dry electrode during a manufacturing process. In addition, the method of manufacturing the dry electrode according to this embodiment may detect the metal material in the outer surface or inside of the first free-standing film F1 or the second free-standing film F2 that is unintentionally included in the dry electrode during the manufacturing process, and mark a part of the first free-standing film F1 or the second free-standing film F2 of the dry electrode at which the metal material is detected. The part of the marked dry electrode may then be excluded from various next processes, thereby both improving the quality of the dry electrode and the stability of a process of manufacturing the dry electrode.

According to the present disclosure, a method of manufacturing the dry electrode is provided that both improves the quality of the dry electrode and the stability of the process of manufacturing the dry electrode by detecting metal material in an outer surface or inside of a free-standing film laminated on a current collector.

Although the embodiments of the disclosure have been described in detail above, the scope of the disclosure is not limited thereto. Various modifications and improvements made by those of ordinary skill in the field to which the disclosure pertains.

Embodiments are set out in the following clauses:
Clause 1. An apparatus for manufacturing a dry electrode, the apparatus comprising: a laminating roller configured to laminate a free-standing film on a surface of a current collector; and an X-ray detector positioned adjacent to the laminating roller and configured to irradiate X-rays onto the free-standing film and detect a metal material in the free-standing film.
Clause 2. The apparatus according to clause 1, wherein the X-ray detector is positioned at a front side of the laminating roller.
Clause 3. The apparatus according to clause 2, wherein the X-ray detector comprises: an X-ray source configured to irradiate the X-rays onto the free-standing film from an upper side of the free-standing film; and a detector positioned to correspond to the X-ray source with the free-standing film disposed therebetween, the detector being configured to detect the X-rays.
Clause 4. The apparatus according to clause 1, wherein the X-ray detector is positioned at a rear side of the laminating roller.
Clause 5. The apparatus according to clause 4, wherein the X-ray source is a first X-ray source and the detector is a first detector, and wherein the X-ray detector comprises: a second X-ray source configured to irradiate X-rays onto the free-standing film and the current collector from an upper side of the free-standing film; and a second detector positioned to correspond to the second X-ray source with the free-standing film and the current collector disposed therebetween, the second detector being configured to detect the X-rays irradiated from the second X-ray source.
Clause 6. The apparatus according to clause 1, further comprising a marker spaced apart from the X-ray detector, located at a rear side of the laminating roller, and connected to the X-ray detector, the marker being configured to mark a part of the free-standing film at a position corresponding to the metal material.
Clause 7. The apparatus according to clause 1, where the laminating roller is a first laminating roller and the free-standing film is a first free-standing film, and wherein the apparatus further comprises a second laminating roller configured to laminate a second free-standing film on a second surface of the current collector.
Clause 8. The apparatus according to clause 7, wherein the X-ray detector is a first X-ray detector and the apparatus further comprises a second X-ray detector positioned adjacent to the second laminating roller, the second X-ray detector being configured to irradiate the X-rays onto the second free-standing film and detect metal material inside the second free-standing film.
Clause 9. The apparatus according to clause 8, wherein the second X-ray detector is positioned at a front side of the second laminating roller.
Clause 10. The apparatus according to clause 9, wherein the second X-ray detector comprises: a second X-ray source configured to irradiate X-rays onto the second free-standing film from an upper side of the second free-standing film; and a second detector positioned to correspond to the third X-ray source with the second free-standing film disposed therebetween, the second detector being configured to detect the X-rays irradiated from the second X-ray source.
Clause 11. The apparatus according to clause 8, wherein the second X-ray detector is located at a rear side of the second laminating roller.
Clause 12. The apparatus according to clause 11, further comprising: a third X-ray source configured to irradiate X-rays onto the second free-standing film, the current collector, and the first free-standing film from an upper side of the second free-standing film; and a third detector positioned to correspond to the fourth X-ray source with the second free-standing film, the current collector, and the first free-standing film disposed therebetween, the third detector being configured to detect the X-rays irradiated from the third X-ray source.
Clause 13. The apparatus according to clause 8, further comprising: a first marker spaced apart from the first X-ray detector, located at a rear side of the laminating roller, and connected to the first X-ray detector, the first marker being configured to mark a part of the free-standing film at a position corresponding to the location of the metal material; and a second marker spaced from the first X-ray detector and the second X-ray detector, located at a rear side of the second laminating roller, connected to the first X-ray detector and the second X-ray detector, the second marker being configured to mark a part of at least one of the first free-standing film and the second free-standing film at a position corresponding to the metal material.
Clause 14. A method of manufacturing a dry electrode, the method comprising: laminating a first free-standing film on a first surface of a current collector; laminating a second free-standing film on a second surface of the current collector; and detecting metal material in at least one of the first free-standing film and the second free-standing film by irradiating X-rays onto at least one of the first free-standing film and the second free-standing film.
Clause 15. The method according to clause 14, further comprising marking a part of at least one of the first free-standing film and the second free-standing film at a position corresponding to metal material.
Clause 16. The method according to clause 15, further comprising forming a plurality of electrode plates by notching the dry electrode including the current collector, the first free-standing film, and the second free-standing film.
Clause 17. The method according to clause 16, further comprising excluding electrode plates among the plurality of electrode plates that include the marking.
Clause 18. The method according to clause 16, wherein the forming of the plurality of electrode plates includes notching a part of the dry electrode that does not include the marking.
Clause 19. The method according to clause 16, wherein the detecting of the metal material inside at least one of the first free-standing film and the second free-standing film is performed by irradiating X-rays onto the plurality of electrode plates.
Clause 20. The method according to clause 19, further comprising stacking electrode plates among the plurality of electrode plates that do not include the marking.

### <Description of symbols>

first laminating roller 100, second laminating roller 200, first X-ray detector 300, second X-ray detector 400, first marker 500, third X-ray detector 600, fourth X-ray detector 700, second marker 800

## Claims

1. An apparatus for manufacturing a dry electrode, the apparatus comprising:
a laminating roller configured to laminate a free-standing film on a surface of a current collector; and
an X-ray detector positioned adjacent to the laminating roller and configured to irradiate X-rays onto the free-standing film and detect a metal material in the free-standing film.

2. The apparatus as claimed in claim 1, wherein the X-ray detector is positioned at a front side of the laminating roller.

3. The apparatus as claimed in claim 1 or 2, wherein the X-ray detector comprises:
an X-ray source configured to irradiate the X-rays onto the free-standing film from an upper side of the free-standing film; and
a detector positioned to correspond to the X-ray source with the free-standing film disposed therebetween, the detector being configured to detect the X-rays.

4. The apparatus as claimed in claim 1, wherein the X-ray detector is positioned at a rear side of the laminating roller.

5. The apparatus as claimed in claim 4, wherein the X-ray source is a first X-ray source and the detector is a first detector, and
wherein the X-ray detector comprises:
a second X-ray source configured to irradiate X-rays onto the free-standing film and the current collector from an upper side of the free-standing film; and
a second detector positioned to correspond to the second X-ray source with the free-standing film and the current collector disposed therebetween, the second detector being configured to detect the X-rays irradiated from the second X-ray source.

6. The apparatus as claimed in any preceding claim, further comprising a marker spaced apart from the X-ray detector, located at a rear side of the laminating roller, and connected to the X-ray detector, the marker being configured to mark a part of the free-standing film at a position corresponding to the metal material.

7. The apparatus as claimed in any preceding claim, where the laminating roller is a first laminating roller and the free-standing film is a first free-standing film, and
wherein the apparatus further comprises a second laminating roller configured to laminate a second free-standing film on a second surface of the current collector.

8. The apparatus as claimed in claim 7, wherein the X-ray detector is a first X-ray detector and the apparatus further comprises a second X-ray detector positioned adjacent to the second laminating roller, the second X-ray detector being configured to irradiate the X-rays onto the second free-standing film and detect metal material inside the second free-standing film,
wherein the second X-ray detector is optionally positioned at a front side of the second laminating roller.

9. The apparatus as claimed in claim 8, wherein the second X-ray detector comprises:
a second X-ray source configured to irradiate X-rays onto the second free-standing film from an upper side of the second free-standing film; and
a second detector positioned to correspond to the third X-ray source with the second free-standing film disposed therebetween, the second detector being configured to detect the X-rays irradiated from the second X-ray source,
wherein the second X-ray detector is optionally located at a rear side of the second laminating roller.

10. The apparatus as claimed in claim 8 or 9, further comprising:
a third X-ray source configured to irradiate X-rays onto the second free-standing film, the current collector, and the first free-standing film from an upper side of the second free-standing film; and
a third detector positioned to correspond to the fourth X-ray source with the second free-standing film, the current collector, and the first free-standing film disposed therebetween, the third detector being configured to detect the X-rays irradiated from the third X-ray source.

11. The apparatus as claimed in any one of claims 8 to 10, further comprising:
a second marker spaced from the first X-ray detector and the second X-ray detector, located at a rear side of the second laminating roller, connected to the first X-ray detector and the second X-ray detector, the second marker being configured to mark a part of at least one of the first free-standing film and the second free-standing film at a position corresponding to the metal material.

12. A method of manufacturing a dry electrode, the method comprising:
laminating a first free-standing film on a first surface of a current collector;
laminating a second free-standing film on a second surface of the current collector; and
detecting metal material in at least one of the first free-standing film and the second free-standing film by irradiating X-rays onto at least one of the first free-standing film and the second free-standing film.

13. The method as claimed in claim 12, further comprising marking a part of at least one of the first free-standing film and the second free-standing film at a position corresponding to metal material.

14. The method as claimed in claim 13, further comprising:
forming a plurality of electrode plates by notching the dry electrode including the current collector, the first free-standing film, and the second free-standing film;
optionally excluding electrode plates among the plurality of electrode plates that include the marking;
wherein the forming of the plurality of electrode plates optionally includes notching a part of the dry electrode that does not include the marking.

15. The method as claimed in claim 14, wherein the detecting of the metal material inside at least one of the first free-standing film and the second free-standing film is performed by irradiating X-rays onto the plurality of electrode plates,
the method optionally further comprising stacking electrode plates among the plurality of electrode plates that do not include the marking.
